(19) Europäisches Patentamt
European Patent Office
Office européen des brevets

(11) EP 2 883 901 B1

(12) **EUROPEAN PATENT SPECIFICATION**

(45) Date of publication and mention of the grant of the patent:
**02.01.2019 Bulletin 2019/01**

(21) Application number: **13835751.2**

(22) Date of filing: **06.09.2013**

(51) Int Cl.:
***C08J 3/215*** *(2006.01)* ***B60C 1/00*** *(2006.01)*
***C08C 1/14*** *(2006.01)* ***C08K 3/36*** *(2006.01)*
***C08L 9/08*** *(2006.01)* ***C08J 3/205*** *(2006.01)*

(86) International application number:
**PCT/JP2013/074020**

(87) International publication number:
**WO 2014/038650 (13.03.2014 Gazette 2014/11)**

# (54) PNEUMATIC TIRE BASED ON A SILICA/STYRENE BUTADIENE RUBBER COMPOSITE BODY AND METHOD FOR PRODUCING SAME

LUFTREIFEN AUS KIESELSÄURE/STYROL-BUTADIEN-VERBUNDKÖRPER UND HERSTELLUNGSVERFAHREN DAFÜR

PNEUMATIQUE À BASE DE CORPS COMPOSITE DE SILICE ET CAOUTCHOUC BUTADIÈNE-STYRÈNE AINSI QUE PROCÉDÉ DE FABRICATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2012 JP 2012197500**

(43) Date of publication of application:
**17.06.2015 Bulletin 2015/25**

(73) Proprietor: **Sumitomo Rubber Industries, Ltd.**
**Kobe-shi, Hyogo 651-0072 (JP)**

(72) Inventor: **KOMORI Yoshihiko**
**Kobe-shi**
**Hyogo 651-0072 (JP)**

(74) Representative: **Manitz Finsterwald Patentanwälte PartmbB**
**Martin-Greif-Strasse 1**
**80336 München (DE)**

(56) References cited:
**WO-A1-2004/067625** **JP-A- 2001 213 971**
**JP-A- 2011 079 912** **US-A- 4 482 657**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 883 901 B1

## Description

### TECHNICAL FIELD

The present invention relates to a silica/styrene butadiene rubber composite and a method of producing the composite. The present invention also relates to a rubber composition and a pneumatic tire each containing the composite.

### BACKGROUND ART

There are attempts to enhance fuel economy of tires by using silica as filler to provide good low heat build-up properties. Silica has silanol groups on its surface and is hydrophilic. Thus, it has low affinity with rubber which is usually hydrophobic. Moreover, silica is not easily dispersed homogeneously in rubber due to its strong self-aggregation properties.

A known approach to dispersing silica in rubber includes adding a silica slurry to natural rubber latex, stirring the mixture, and then adding acid to coagulate the rubber. This approach is known to achieve better dispersion of silica than those in which rubber and silica are mixed in a dry state.

Patent Literature 1 discloses a method of producing a composite by mixing rubber latex with a finely divided silica formed from waterglass, in a liquid state; however, it does not suggest the use of styrene butadiene rubber latex. Also, there is room for improvement in terms of dispersibility and loss of silica.

Moreover, Patent Literature 2 discloses a method of producing a composite by mixing natural rubber latex with a dispersion of finely divided silica in the presence of a surfactant. However, the use of this method is limited to natural rubber latex and this method has not been achieved with styrene butadiene rubber latex.

US 4,482,657 discloses a method for producing a silica-synthetic polymer mixture comprising the steps of mixing silica with a particle size of 10 to 100 nm with water in alkyl trimethylammonium bromide or chloride, where after the so obtained dispersion is mixed with a latex of synthetic conjugated $C_{4\text{-}6}$-diolefin. Afterwards, the so obtained mixture is coagulated by raising the pH value by addition of sulfuric acid to 4.5.

### CITATION LIST

### PATENT LITERATURE

Patent Literature 1: JP 2009-51955 A
Patent Literature 2: JP 2012-107211 A

### SUMMARY OF INVENTION

### TECHNICAL PROBLEM

The present invention aims to solve the above problem and provide a silica/styrene butadiene rubber composite containing finely dispersed silica, and a method of producing the composite. The present invention also aims to provide a rubber composition and a pneumatic tire each containing the composite.

### SOLUTION TO PROBLEM

In preparing a silica/styrene butadiene rubber composite containing finely dispersed silica, if a mixture of styrene butadiene rubber latex and a silica slurry is coagulated by adjusting the pH of the mixture to the acid side, the resulting rubber forms a large mass and cannot sufficiently incorporate silica, so that the rubber is separated from silica, which allows silica to form large aggregates. Thus, a composite in which silica is homogeneously and finely dispersed cannot be obtained. Further, owing to the separation, silica load is reduced, resulting in loss of silica.

The present inventor made various investigations on this problem. As a result, the inventor found that, if styrene butadiene rubber latex synthesized by emulsion polymerization is mixed with a dispersion of finely divided silica in the presence of a combination of a surfactant and an alkali, the mixture can be coagulated while maintaining an increased interaction between silica and rubber, which enhances silica dispersibility (Japanese Patent Application No. 2011-224962) . In the present invention, the inventor has further found that by adopting an improved method of adding a surfactant, the coagulation can be effected only by the use of a surfactant, without alkali, in such a way that silica dispersibility can be enhanced. Therefore, the present inventor has completed the present invention.

Specifically, the present invention relates to apneumatic tire including a tire component, wherein the tire component is formed from a rubber composition comprising a silica/styrene butadiene rubber composite, obtained from a compounded latex, the compounded latex being prepared by mixing at least one of a non-ionic surfactant and a cationic surfactant represented by the formula (IV) below with a dispersion of finely divided silica having an average particle size of 1 μm or smaller to obtain a mixture, and then mixing the mixture with emulsion polymerized styrene-butadiene rubber latex,

$$[R^7R^8R^9R^{10}N]^+X^- \qquad (IV)$$

wherein $R^7$ and $R^8$ are the same as or different from each other and each represent a C1-C22 alkyl or alkenyl group, provided that at least one of $R^7$ and $R^8$ has 4 or more carbon atoms; $R^9$ and $R^{10}$ each represent a C1-C3 alkyl group; and X represents a monovalent anion, wherein the average particle size of the finely divided silica is determined by observation with a transmission electron microscope, wherein a picture of fine particles is taken with the transmission electron microscope and the particle sizes of 100 fine particles are measured and averaged to determine the average particle size.

The present invention also relates to a method of preparing a pneumatic tire including a tire component, wherein the tire component is formed from a rubber composition comprising a silica/styrene butadiene rubber composite, wherein the silica/styrene butadiene rubber composite is prepared by a method including: step 1 of mixing a surfactant with a dispersion of finely divided silica having an average particle size of 1 μm or smaller to obtain a mixture, and then mixing the mixture with emulsion polymerized styrene-butadiene rubber latex to prepare a compounded latex; and step 2 of adjusting the pH of the compounded latex obtained in step 1 to 5 to 7 to coagulate the compounded latex.

## ADVANTAGEOUS EFFECTS OF INVENTION

The present invention uses a compounded latex that is prepared by mixing a surfactant with a dispersion of finely divided silica having an average particle size of 1 μm or smaller to obtain a mixture, and then mixing the mixture with emulsion polymerized styrene-butadiene rubber latex (E-SBR latex). Thus, a silica/styrene butadiene rubber composite in which silica is finely dispersed in the rubber component can be obtained without using alkali. Moreover, loss of silica and styrene butadiene rubber during the production can be reduced.

## DESCRIPTION OF EMBODIMENTS

### <Silica/styrene butadiene rubber composite>

The silica/styrene butadiene rubber composite (silica/SBR composite) used in the pneumatic tire of the present invention is obtained from a compounded latex that is prepared by mixing a surfactant with a dispersion of finely divided silica having an average particle size of 1 μm or smaller to obtain a mixture, and then mixing the mixture with emulsion polymerized styrene-butadiene rubber latex (E-SBR latex).

According to the studies made to create the present invention, if E-SBR latex and a dispersion of finely divided silica are mixed, the mixture does not coagulate when acid or the like is added thereto, whereas if a surfactant and a dispersion of finely divided silica are preliminarily mixed, and the mixture is mixed with E-SBR latex, the interaction between silica and rubber is increased so that separation of silica from rubber and aggregation of silica can be prevented, and, at the same time, good coagulation properties are exhibited. Thus, a composite in which silica is homogeneously and finely dispersed can be prepared. Furthermore, since the composite is prepared in the presence of a surfactant, the loss of silica and styrene butadiene rubber can be reduced.

In Japanese Patent Application No. 2011-224962, a combination of an alkali and a surfactant is used for coagulation. However, it is now revealed that mixing a surfactant, a dispersion of finely divided silica, and E-SBR latex in the above-mentioned order allows coagulation to occur without using alkali. By eliminating the use of alkali, formation of salts is reduced and thus less salt is taken into the end product, which is expected to improve physical properties. The cost can be reduced as well.

The composite may be prepared, for example, by a method including: step 1 of mixing a surfactant with a dispersion of finely divided silica having an average particle size of 1 μm or smaller to obtain a mixture, and then mixing the mixture with E-SBR latex to prepare a compounded latex; and step 2 of adjusting the pH of the compounded latex obtained in step 1 to 5 to 7 to coagulate the compounded latex.

#### (Step 1)

The surfactant to be used in step 1 is a non-ionic or cationic surfactant, more preferably a non-ionic surfactant,

as it enables enhanced dispersion of silica.

The non-ionic surfactant is not particularly limited, and conventionally known surfactants may be used, including polyoxyalkylene alkyl ethers such as polyoxyethylene alkyl ethers, polyoxyethylene polypropylene alkyl ethers, and polyoxyethylene polybutylene alkyl ethers; polyoxyalkylene alkenyl ethers such as polyoxyethylene alkenyl ethers; polyoxyethylene alkyl phenyl ethers; and higher fatty acid alkanolamides. Since a polyoxyethylene group can increase the strength of hydrogen bonding to the surface of silica, non-ionic surfactants containing a polyoxyethylene group and a hydrocarbon group as a hydrophilic group and a hydrophobic group, respectively, can suitably be used.

The non-ionic surfactant may suitably be a compound represented by one of the formulas (I) to (III) below, and particularly suitably a compound represented by the formula (I), because the effect of the invention can be well achieved.

$$R^1\text{-O-}(EO)_x\text{-H} \qquad (I)$$

In the formula (I), $R^1$ represents a C3-C50 alkyl group or a C3-C50 alkenyl group; EO represents an oxyethylene group; and the average addition mole number x is 3 to 100.

$R^1$ preferably has 5 to 30 carbon atoms, and more preferably has 8 to 20 carbon atoms. The x is preferably 5 to 50, more preferably 8 to 30.

$$R^2\text{-O-}(AO)_y(EO)_z\text{-H} \qquad (II)$$

In the formula (II), $R^2$ represents a C3-C50 alkyl group or a C3-C50 alkenyl group; AO represents an oxypropylene group or an oxybutylene group; EO represents an oxyethylene group; the average addition mole number y is 3 to 100; and the average addition mole number z is 3 to 100.

$R^2$ preferably has 5 to 30 carbon atoms, and more preferably has 8 to 20 carbon atoms. The y is preferably 5 to 50, more preferably 8 to 30. The z is preferably 5 to 50, more preferably 8 to 30. EO and AO may be arranged blockwise or randomly.

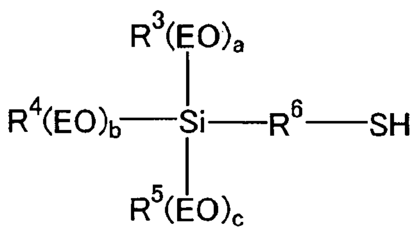

(III)

In the formula (III) , $R^3$ to $R^5$ are the same as or different from one another and are each absent or represent a C1-C30 alkyl group, a C1-C30 alkenyl group, or a C1-C30 alkoxy group; $R^6$ represents a C1-C30 alkylene group; EO represents an oxyethylene group; the average addition mole number a is 0 to 50; the average addition mole number b is 0 to 50; and the average addition mole number c is 1 to 50.

$R^3$ and $R^4$ each preferably have 1 to 25 carbon atoms. $R^5$ preferably has 1 to 25 carbon atoms. $R^6$ preferably has 3 to 8 carbon atoms. The numbers a and b are each preferably 0 to 30, more preferably 10 to 30, and c is preferably 1 to 30, more preferably 10 to 30.

The cationic surfactant is a quaternary ammonium salt type surfactant, i.e. a surfactant containing a quaternary ammonium group and a hydrocarbon group. Specific examples include compounds represented by the following formula (IV):

$$[R^7R^BR^9R^{10}N]^+X^- \qquad (IV)$$

wherein $R^7$ and $R^8$ are the same as or different from each other and each represent a C1-C22 alkyl or alkenyl group, provided that at least one of $R^7$ and $R^8$ has 4 or more carbon atoms; $R^9$ and $R^{10}$ each represent a C1-C3 alkyl group; and X represents a monovalent anion.

In the formula (IV), it is preferred that one of $R^7$ and $R^8$ be a methyl group while the other is a C6-C18 alkyl group. $R^9$ and $R^{10}$ are each preferably a methyl group. Examples of X include halogen ions such as chloride or bromide ions.

Specific examples of the compounds represented by the formula (IV) include alkyltrimethylammonium salts, for example, hexyltrimethylammonium chloride, octyltrimethylammonium chloride, decyltrimethylammonium chloride, dodecyltrimethylammonium chloride, tetradecyltrimethylammonium chloride, hexadecyltrimethylammonium chloride, and stearyltrimethylammonium chloride, and their corresponding bromides. Hexadecyltrimethylammonium bromide is

preferred among these as it can enhance silica dispersibility.

A dispersion of finely divided silica having an average particle size of 1 μm or smaller is used in step 1. In other words, not silica powder but a dispersion (slurry) in which silica having a specific particle size is dispersed in water is used. The finely divided silica to be used in the dispersion is not particularly limited, and examples include dry silica (anhydrous silica) and wet silica (hydrous silica) . Wet silica is preferred because it contains a large number of silanol groups. The finely divided silica may be used alone, or two or more types thereof may be used in combination.

The finely divided silica in the dispersion has an average particle size of 1 μm or smaller, more preferably 0.05 μm or smaller. If the average particle size exceeds 1 μm, tensile strength at break tends to be poor. The average particle size is preferably 0.005 μm or larger, more preferably 0.01 μm or larger. If the average particle size is smaller than 0.005 μm, the finely divided silica may strongly aggregate and thus may be difficult to disperse.

Herein, the average particle size of finely divided silica is determined by observation with a transmission electron microscope (TEM). Specifically, a picture of fine particles is taken with a transmission electron microscope, and the particle sizes of 100 fine particles are measured and averaged to determine the average particle size. Here, for a fine particle having a spherical shape, the diameter of the sphere is defined as particle size; for a fine particle having a needle or rod shape, the minor diameter of the particle is defined as particle size; for a fine particle having an atypical shape, the average of diameters passing through the center of the particle is defined as particle size.

In the dispersion, the finely divided silica preferably has a nitrogen adsorption specific surface area ($N_2SA$) measured by the BET method of 40 $m^2/g$ or more, more preferably 60 $m^2/g$ or more, still more preferably 140 $m^2/g$ or more. If the $N_2SA$ is less than 40 $m^2/g$, tensile strength at break tends to be poor. The $N_2SA$ is also preferably 300 $m^2/g$ or less, and more preferably 250 $m^2/g$ or less. The finely divide silica having a $N_2SA$ of more than 300 $m^2/g$ may strongly aggregate and thus may be difficult to disperse.

The nitrogen adsorption specific surface area measured by the BET method of silica can be determined in accordance with ASTM D3037-81.

The dispersion of finely divided silica may be prepared by any conventionally known methods. For example, it may be prepared by dispersing the finely divided silica using a high-pressure homogenizer, an ultrasonic homogenizer, a colloid mil or the like. The amount of the finely divided silica in the dispersion is not particularly limited but is preferably 1 to 10% by mass in view of homogeneous dispersion in the dispersion (100% by mass).

E-SBR latex is used in step 1. The E-SBR latex preferably has a pH of 8.5 or higher, more preferably 9.5 or higher. The E-SBR latex having a pH of lower than 8.5 tends to be unstable and thus tends to easily coagulate. The E-SBR latex preferably has a pH of 12 or lower, more preferably 11 or lower. The E-SBR latex having a pH of higher than 12 may deteriorate.

The E-SBR latex may be prepared by conventionally known methods. Various commercial products may also be used. The E-SBR latex preferably has a rubber solids content of 10 to 70% by mass.

In the mixing process in step 1, firstly a surfactant and a dispersion of finely divided silica having an average particle size of 1 μm or smaller are mixed and sufficiently stirred until a homogeneous dispersion is formed, thereby obtaining a mixture of the surfactant and the dispersion of finely divided silica. The mixing may be carried out using known stirring devices, such as a blender mill or an ultrasonic homogenizer.

Next, the mixture of the dispersion of finely divided silica and the surfactant was mixed with E-SBR latex and sufficiently stirred until a homogeneous dispersion is formed, thereby obtaining a compounded latex (liquid mixture). The mixing may be carried out by a method of putting E-SBR latex in a known stirring device (e.g. blender mill) and adding dropwise the mixture of the dispersion of finely divided silica and the surfactant to the device while stirring, or by a method of adding dropwise E-SBR latex to the mixture of the dispersion of finely divided silica and the surfactant while stirring.

The compounded latex preferably has a pH of 9.0 or higher, more preferably 9.5 or higher. The compounded latex having a pH of lower than 9.0 tends to be unstable . The compounded latex preferably has a pH of 12 or lower, more preferably 11.5 or lower. The compounded latex having a pH of higher than 12 may deteriorate.

In the mixing process, the dispersion of finely divided silica is preferably combined in such a manner that the amount of the finely divided silica is 5 to 150 parts by mass (calculated as $SiO_2$) per 100 parts by mass of SBR (solids content) . If the amount is less than 5, such an amount of finely divided silica is so small that the effect of the present invention tends not to be sufficiently achieved. If the amount is more than 150 parts by mass, silica tends to be less homogeneously dispersed. The amount of the finely divided silica is more preferably 30 parts by mass or more. The amount is also more preferably 100 parts by mass or less, and still more preferably 70 parts by mass or less.

The amount of surfactant to be added in the mixing process is preferably 0.1 to 10 parts by mass per 100 parts by mass of SBR (solids content) . If the amount is less than 0.1 parts by mass, such an amount of surfactant is so small that the effect of the present invention tends not to be sufficiently achieved. If the amount is more than 10 parts by mass, the surfactant tends to contribute to deterioration of physical properties. Additionally, silica tends to be less homogeneously dispersed. The amount is more preferably 0.5 parts by mass or more. The amount is also more preferably 8 parts by mass or less, and still more preferably 6 parts by mass or less.

The temperature and time for the mixing process are preferably at 10 to 40°C for 5 to 120 minutes, more preferably at 15 to 30°C for 10 to 90 minutes, because then a homogeneous compounded latex can be prepared.

(Step 2)

In step 2, the pH of the compounded latex obtained in step 1 is adjusted to 5 to 7 (preferably 6 to 7) to coagulate the compounded latex. If the pH is lower than 5, silica tends to be poorly dispersed. Also, if the pH is higher than 7, coagulation tends not to be allowed to proceed, and silica tends to be poorly dispersed.

To adjust the pH to 5 to 7 to coagulate the compounded latex, acid is usually used. The compounded latex is coagulated by adding the acid thereto. Examples of acids that can be used for the coagulation include sulfuric acid, hydrochloric acid, formic acid, and acetic acid. The coagulation process is preferably carried out at a temperature of 10 to 40°C.

Moreover, a flocculant may be added to control the coagulation characteristics (size of aggregated particles in a coagulum). Examples of the flocculants include cationic polymers.

The resulting coagulum (aggregated mass including aggregated rubber and silica) can be filtrated off and dried by known methods, followed by kneading with a two-roll mill, Banbury mixer or the like, thereby obtaining a composite in which the finely divided silica is homogeneously dispersed in SBR matrix. The silica/SBR composite of the present invention may contain other components, as long as the effect of the present invention is not inhibited.

<Rubber composition>

The rubber composition used in the pneumatic tire of the present invention contains the silica/SBR composite. The silica/SBR composite may be used as a masterbatch. Since silica is homogeneously dispersed in rubber in the silica/SBR composite, homogenous dispersion of silica can still be achieved in the rubber composition containing the composite in combination with other components. Thus, the silica can be expected to provide effective reinforcement.

The rubber composition used in the pneumatic tire of the present invention may appropriately contain, in addition to the silica/SBR composite, various materials commonly used in the tire industry, including rubbers other than SBR, fillers such as carbon black, silane coupling agents, zinc oxide, stearic acid, antioxidants, sulfur, and vulcanization accelerators.

<Pneumatic tire>

The pneumatic tire of the present invention may be manufactured using the rubber composition by ordinary methods . Specifically, the unvulcanized rubber composition containing additives as needed is extruded and processed into the shape of a tire component and then formed on a tire building machine in an ordinary manner to build an unvulcanized tire, which is then heat-pressurized in a vulcanizer to produce a tire.

EXAMPLES

The present invention will now be specifically described by reference to, but not limited to, examples.

The chemicals used in the examples and comparative examples are collectively described below.

E-SBR latex: One synthesized by a conventionally known technique (styrene content: 23.5% by mass, rubber solids content: 23% by mass, pH: 10.1)
Wet silica: TOKUSIL USG produced by Tokuyama Corporation (average particle size: 20 nm, $N_2SA$: 170 $m^2/g$)
Surfactant 1 (non-ionic surfactant): Teric 16A29 ($CH_3(CH_2)_{15}(OC_2H_4)_{29}$-OH) produced by Huntsman Corporation
Surfactant 2 (non-ionic surfactant): Si363 produced by Evonik-Degussa (surfactant represented by the following formula)

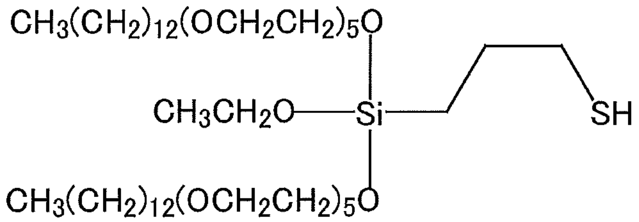

Surfactant 3 (cationic surfactant): Hexadecyltrimethylammonium bromide produced by Wako Pure Chemical Industries, Ltd. (surfactant represented by the following formula)

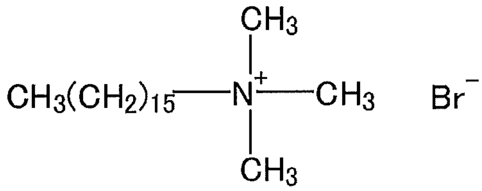

Surfactant 4 (non-ionic surfactant): PD-430 ($R\text{-}(OC_4H_8)_p(OC_2H_4)_q\text{-}OH$ in which R = a long chain alkyl group, p = 3 to 100, and q = 3 to 100) produced by Kao Corporation
Sulfuric acid (10%): produced by Wako Pure Chemical Industries, Ltd.
Ammonia water (10% by mass): produced by Wako Pure Chemical Industries, Ltd.
Silane coupling agent: Si69 (bis(3-triethoxysilyl-propyl)tetrasulfide) produced by Evonik-Degussa
Zinc oxide: zinc oxide #2 produced by Mitsui Mining and Smelting Co., Ltd.
Stearic acid: "TSUBAKI" produced by NOF Corporation
Antioxidant: Nocrac 6C (N-(1,3-dimethylbutyl)-N'-phenyl-p-phenylenediamine) produced by Ouchi Shinko Chemical Industrial Co., Ltd.
Sulfur: Powdered sulfur produced by Tsurumi Chemical Industry Co., Ltd.
Vulcanization accelerator NS: Nocceler NS (N-tert-butyl-2-benzothiazolylsulfenamide) produced by Ouchi Shinko Chemical Industrial Co., Ltd.

<Examples 1 to 7>

(Preparation of silica dispersion)

Pure water in an amount of 85.5 g was added to 4.5 g of wet silica to prepare a 5% silica suspension. The suspension was stirred and then subjected to ultrasonication for 10 minutes to obtain a silica dispersion.

(Preparation of silica/natural rubber composite)

The surfactant shown in Table 1 was added to 90 g of the silica dispersion and then stirred with an ultrasonic homogenizer (output: 100 W) for 5 minutes to obtain a mixture of the silica dispersion and the surfactant. The mixture was added to 43.5 g of E-SBR latex, and they were mixed and stirred for one hour at room temperature to obtain a compounded latex having a pH of 9.5. Next, sulfuric acid was added to the compounded latex at room temperature to adjust the pH of the compounded latex to 6 to 7 so that a coagulum was obtained. The coagulum was filtrated off and dried to obtain a silica/SBR composite.

<Comparative Examples 1 and 2>

The silica dispersion in an amount of 90 g and the surfactant shown in Table 1 were added to 43.5 g of E-SBR latex, and they were mixed and stirred for one hour at room temperature to obtain a compounded latex having a pH of 9.5. Next, sulfuric acid was added to the compounded latex at room temperature to adjust the pH of the compounded latex to 6 to 7. The thus formed composite was filtrated off.
The following evaluations were performed on the products obtained in Examples 1 to 7 and Comparative Examples 1 and 2. Table 1 shows the results. In Table 1, the input amount of surfactant means the amount (phr) relative to 100 parts by mass of the rubber solids content in E-SBR latex.

(Conditions of filtrate (loss of silica and SBR)

Regarding the loss of silica and SBR, the conditions of the filtrate after the filtration were observed and evaluated according to the following criteria.

Transparent or semitransparent: Almost no loss
White turbid: Large loss

(Assessment of coagulation)

The state of the compounded latex after the addition of sulfuric acid was assessed. If coagulated, the latex is marked as "Good"; if not, as "Bad".

[Table 1]

| | | Comparative Example 1 | Comparative Example 2 | Example 1 | Example 2 | Example 3 | Example 4 | Example 5 | Example 6 | Example 7 |
|---|---|---|---|---|---|---|---|---|---|---|
| Input amount of surfactant (phr) | Surfactant 1 | - | 5 | 5 | 1.5 | 1 | - | - | - | - |
| | Surfactant 2 | - | - | - | - | - | 2 | 4 | - | - |
| | Surfactant 3 | - | - | - | - | - | - | - | 2 | - |
| | Surfactant 4 | - | - | - | - | - | - | - | - | 2 |
| Preliminary mixing of surfactant with silica dispersion | | No | No | Yes | Yes | Yes | Yes | Yes | Yes | Yes |
| Results | Conditions of filtrate | White turbid | White turbid | Transparent | Transparent | Semitransparent | Transparent | Transparent | Transparent | Transparent |
| | Assessment of coagulation | Bad | Bad | Good | Good | Good | Good | Good | Good | Good |

The compounded latex of Comparative Example 1 using no surfactant was unable to coagulate.

The compounded latex of Comparative Example 2, in which a surfactant was used but was not preliminarily mixed with a silica dispersion, was unable to coagulate either.

In contrast, in Example 1 in which the same formulation as that of Comparative Example 2 was used, but a surfactant and a silica dispersion were preliminarily mixed, the compounded latex coagulated. Thus a silica/SBR composite could be obtained.

Comparison of Examples 1 to 3 demonstrates that in the cases where the input amount of surfactant was 1.5 phr or more, the filtrate was transparent and thus the loss of silica and SBR was particularly small.

It is also demonstrated that silica/SBR composites could be obtained in Examples 4 to 7 in which the type of surfactant was changed.

<Example 8 to 13 and Comparative Example 3>

In accordance with the formulations shown in Table 2, the chemicals other than the sulfur and the vulcanization accelerator were kneaded using a 1.7-L Banbury mixer to give a kneaded mixture. Next, the sulfur and the vulcanization accelerator were added to the kneaded mixture and they were kneaded using a roll to prepare an unvulcanized rubber composition. The unvulcanized rubber composition was press-vulcanized at 170°C for 15 minutes to provide a vulcanizate. The vulcanizate was evaluated on the following items. Table 2 shows the results.

(Rolling resistance)

The tan δ of each formulation (vulcanizate) was measured using a viscoelasticity spectrometer VES (produced by Iwamoto Seisakusho Co., Ltd.) under a temperature of 50°C, an initial strain of 10%, a dynamic strain of 2%, and a frequency of 10 Hz. The measured values are expressed as an index (rolling resistance index) calculated according to the expression below, with the tan δ of the rubber specimen (standard specimen) of Comparative Example 3 being set equal to 100. A higher index indicates better rolling resistance properties (better fuel economy).

$$(\text{Rolling resistance index}) = (\tan\delta \text{ of standard specimen})/(\tan\delta \text{ of each formulation}) \times 100$$

(Abrasion test)

Lambourn abrasion loss was determined using a Lambourn abrasion tester under a temperature of 20°C, a slip ratio of 20%, and a test time of 2 minutes. Then, volumetric loss was calculated from the Lambourn abrasion loss. The volumetric losses of the formulations are expressed as an index relative to the abrasion index (=100) of the rubber specimen (standard specimen) of Comparative Example 3 in accordance with the expression below. A higher index indicates better abrasion resistance.

$$(\text{Abrasion index}) = (\text{Volumetric loss of standard specimen})/(\text{Volumetric loss of each formulation}) \times 100$$

(Tensile strength at break, elongation at break)

No. 3 dumbbell-shaped rubber specimens were prepared from the vulcanizates, and they were then subjected to tensile testing in conformity with "Rubber, vulcanized or thermoplastic - Determination of tensile stress-strain properties" (JIS K6251) to determine tensile strength at break (TB) and elongation at break (EB). The TB and EB values of the formulations are expressed as an index relative to the TB index and EB index (each set to 100), respectively, of the rubber specimen (standard specimen) of Comparative Example 3 in accordance with the expressions below. A higher TB index indicates better reinforcement, while a higher EB index indicates better crack resistance.

$$(\text{TB index}) = (\text{TB of each formulation})/(\text{TB of standard specimen}) \times 100$$

$$(\text{EB index}) = (\text{EB of each formulation}) / (\text{EB of standard specimen}) \times 100$$

[Table 2]

| | | Example 8 | Example 9 | Example 10 | Example 11 | Example 12 | Example 13 | Comparative Example 3 |
|---|---|---|---|---|---|---|---|---|
| Formulation (parts by mass) | Silica/SBR composite (SBR content: 100 parts) (Silica content: 45 parts) | Example 1 | Example 2 | Example 4 | Example 5 | Example 6 | Example 7 | — |
| | | 145 | 145 | 145 | 145 | 145 | 145 | |
| | SBR | — | — | — | — | — | — | 100 |
| | Silica | — | — | — | — | — | — | 45 |
| | Silane coupling agent | 3.6 | 3.6 | — | — | 3.6 | 3.6 | 3.6 |
| | Zinc oxide | 3 | 3 | 3 | 3 | 3 | 3 | 3 |
| | Stearic acid | 2 | 2 | 2 | 2 | 2 | 2 | 2 |
| | Antioxidant | 2 | 2 | 2 | 2 | 2 | 2 | 2 |
| | Sulfur | 1.5 | 1.5 | 1.5 | 1.5 | 1.5 | 1.5 | 1.5 |
| | Vulcanization accelerator NS | 1 | 1 | 1 | 1 | 1 | 1 | 1 |
| Evaluation | Rolling resistance index | 112 | 115 | 108 | 110 | 112 | 108 | 100 |
| | Abrasion index | 98 | 110 | 115 | 117 | 108 | 110 | 100 |
| | TB index | 102 | 105 | 100 | 101 | 105 | 104 | 100 |
| | EB index | 110 | 115 | 105 | 102 | 108 | 107 | 100 |

As Table 2 indicates, in the examples using a silica/SBR composite obtained from a compounded latex that was prepared by mixing a surfactant with a dispersion of finely divided silica having an average particle size of 1 μm or smaller to obtain a mixture, and then mixing the mixture with emulsion polymerized styrene-butadiene rubber latex, high-level balanced performance was achieved in terms of fuel economy, abrasion resistance, tensile strength at break, and elongation at break, which are properties required in tires, as compared to the comparative examples. In particular, in Examples 10 and 11 using the silica/SBR composites of Examples 4 and 5 (silica/SBR composites prepared using the surfactant 2 (Si 363)), respectively, it was not necessary to additionally add a silane coupling agent in the preparation of the rubber composition for tires. Thus, they were also excellent in terms of cost efficiency.

## Claims

**1.** A pneumatic tire including a tire component, wherein the tire component is formed from a rubber composition comprising a silica/styrene butadiene rubber composite, obtained from a compounded latex, the compounded latex being prepared by mixing at least one of a non-ionic surfactant and a cationic surfactant represented by the formula (IV) below with a dispersion of finely divided silica having an average particle size of 1 μm or smaller to obtain a mixture, and then mixing the mixture with emulsion polymerized styrene-butadiene rubber latex,

$$[R^7R^8R^9R^{10}N]^+X^- \qquad \text{(IV)}$$

wherein $R^7$ and $R^8$ are the same as or different from each other and each represent a C1-C22 alkyl or alkenyl group, provided that at least one of $R^7$ and $R^8$ has 4 or more carbon atoms; $R^9$ and $R^{10}$ each represent a C1-C3 alkyl group; and X represents a monovalent anion, wherein the average particle size of the finely divided silica is determined by observation with a transmission electron microscope, wherein a picture of fine particles is taken with the transmission electron microscope and the particle sizes of 100 fine particles are measured and averaged to determine the average particle size.

2. A method of preparing a pneumatic tire including a tire component, wherein the tire component is formed from a rubber composition comprising a silica/styrene butadiene rubber composite, wherein the silica/styrene butadiene rubber composite is produced by a method comprising:

   step 1 of mixing a surfactant with a dispersion of finely divided silica having an average particle size of 1 μm or smaller to obtain a mixture, and then mixing the mixture with emulsion polymerized styrene-butadiene rubber latex to prepare a compounded latex; and
   step 2 of adjusting the pH of the compounded latex obtained in step 1 to 5 to 7 to coagulate the compounded latex.

**Patentansprüche**

1. Luftreifen, der eine Reifenkomponente umfasst, wobei die Reifenkomponente aus einer Kautschukzusammensetzung gebildet ist, die Siliciumdioxid/Styrol-Butadien-Kautschuk-Verbundstoff umfasst, erhalten aus einem compoundierten Latex, wobei der compoundierte Latex hergestellt ist durch Mischen von zumindest einem von einem anionischen Tensid und einem kationischen Tensid, dargestellt durch die nachstehende Formel (IV) mit einer Dispersion von fein verteiltem Siliciumdioxid mit einer durchschnittlichen Partikelgröße von 1 μm oder kleiner, um eine Mischung zu erhalten, und anschließend Mischen der Mischung mit emulsionspolymerisiertem Styrol-Butadien-Kautschuk-Latex,

$$[R^7R^8R^9R^{10}N]^+X^- \quad \text{(IV)}$$

wobei $R^7$ und $R^8$ gleich oder verschieden voneinander sind und jeweils für eine C1-C22-Alkylgruppe- oder Alkenylgruppe stehen, vorausgesetzt, dass zumindest eines von $R^7$ und $R^8$ 4 oder mehr Kohlenstoffatome aufweist; $R^9$ und $R^{10}$ jeweils für eine C1-C3-Alkylgruppe stehen; und X für ein monovalentes Anion steht, wobei die durchschnittliche Partikelgröße des fein verteilten Siliciumdioxids durch Beobachtung mit einem Transmissionselektronenmikroskop ermittelt wird, wobei ein Bild der feinen Partikel mit dem Transmissionselektronenmikroskop aufgenommen wird und die Partikelgrößen von 100 feinen Partikeln gemessen und gemittelt werden, um die durchschnittliche Partikelgröße zu ermitteln.

2. Verfahren zum Herstellen eines Luftreifens, der eine Reifenkomponente umfasst, wobei die Reifenkomponente aus einer Kautschukzusammensetzung gebildet wird, die einen Siliciumdioxid/Styrol-Butadien-Kautschuk-Verbundstoff umfasst, wobei der Siliciumdioxid/Styrol-Butadien-Kautschuk-Verbundstoff durch ein Verfahren hergestellt wird, umfassend:

   Schritt 1 eines Mischens eines Tensids mit einer Dispersion von fein verteiltem Siliciumdioxid mit einer durchschnittlichen Partikelgröße von 1 μm oder kleiner, um eine Mischung zu erhalten, und anschließend eines Mischens der Mischung mit emulsionspolymerisiertem Styrol-Butadien-Kautschuk-Latex, um einen compoundierten Latex herzustellen; und
   Schritt 2 eines Einstellens des pH des compoundierten Latex, der in Schritt 1 erhalten worden ist, auf 5 bis 7, um den compoundierten Latex zu koagulieren.

**Revendications**

1. Pneumatique comprenant un composant de pneu, dans lequel le composant de pneu est formé d'une composition de caoutchouc comprenant un composite de silice/caoutchouc de butadiène styrène, obtenu à partir d'un latex composé, le latex composé étant préparé en mélangeant au moins un d'un tensioactif non ionique et d'un tensioactif cationique représenté par la formule (IV) ci-dessous avec une dispersion de silice finement divisée ayant une taille de particule moyenne de 1 mm ou plus petit pour obtenir un mélange, puis mélanger le mélange avec du latex de caoutchouc styrène-butadiène polymérisé en émulsion,

$$[R^7R^8R^9R^{10}N]^+X^- \quad \text{(IV)}$$

où $R^7$et $R^8$ sont identiques ou différents l'un de l'autre et chacun représente un groupe alkyle ou alcényle en C1 à C22, pourvu qu'au moins un de $R^7$ et $R^8$ ait 4 ou plus atomes de carbone ; $R^9$ et $R^{10}$ représentent chacun un groupe alkyle en C1 à C3 ; et X représente un anion monovalent, dans lequel la taille de particule moyenne de la silice finement divisée est déterminée par l'observation avec un microscope électronique à transmission, dans lequel une

image de fines particules est prise avec le microscope électronique à transmission et les tailles de particule de 100 fines particules sont mesurées et moyennées pour déterminer la taille de particule moyenne.

**2.** Procédé de préparation d'un pneumatique comprenant un composant de pneu, dans lequel le composant de pneu est formé à partir d'une composition de caoutchouc comprenant un composite de silice/caoutchouc de styrène butadiène, où le composite de silice/caoutchouc de styrène butadiène est produit par un procédé comprenant :

une étape 1 de mélange d'un tensioactif avec une dispersion de silice finement divisée ayant une taille de particule moyenne de 1 mm ou plus petit pour obtenir un mélange, puis mélanger le mélange avec un latex de caoutchouc styrène-butadiène polymérisé en émulsion pour préparer un latex composé ; et
une étape 2 d'ajustement du pH du latex composé obtenu dans l'étape 1 à 5 à 7 pour coaguler le latex composé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4482657 A
- JP 2009051955 A
- JP 2012107211 A
- JP 2011224962 A